# EUROPÄISCHE PATENTANMELDUNG

(11) **EP 4 135 290 A1**
(43) Veröffentlichungstag der Anmeldung: **15.02.2023**
(21) Anmeldenummer: 21191241.5
(22) Anmeldetag: 13.08.2021
(51) Int. Cl.: H04L 43/10, H04L 43/12, H04L 12/46

(54) **VERFAHREN ZUR ÜBERMITTLUNG VON DATEN ZUR NETZDIAGNOSE ZWISCHEN MITTELBAR VERBUNDENEN TEILNETZEN UND KOPPEL-KOMMUNIKATIONSGERÄT**

(71) Anmelder: Siemens Aktiengesellschaft, 80333 München (DE)
(72) Erfinder: Neumann, Markus, 76189 Karlsruhe (DE); Schwering, Wolfgang, 91341 Röttenbach (DE); Kauer, Karl, 91052 Erlangen (DE)

(57) **Zusammenfassung**

Die Erfindung betrifft ein Verfahren zur Übermittlung von Daten zur Netzdiagnose zwischen mittelbar verbundenen Teilnetzen, bei dem Netzdiagnose-Datagramme (10) entsprechend einem vorgegebenen Netzdiagnose-Protokoll zwischen einem ersten Kommunikationsgerät (110) in einem ersten Teilnetz (11) und einem zweiten Kommunikationsgerät (212-213) in einem zweiten Teilnetz (21) über ein drittes Teilnetz (31, 32) übermittelt werden. Dabei ist das dritte Teilnetz jeweils über ein Koppel-Kommunikationsgerät (1, 2) mit dem ersten und dem zweiten Teilnetz verbunden, und das vorgegebene Netzdiagnose-Protokoll wird nur im ersten und im zweiten Teilnetz unterstützt. In jedem der beiden Koppel-Kommunikationsgeräte sind Koppel-Anschlüsse (101-104, 201-202) jeweils über ein virtuelles lokales Netz verbunden (105, 203). Außerdem wird in beiden Koppel-Kommunikationsgeräten jeweils eine für das vorgegebene Netzdiagnose-Protokoll bestimmte Netzdiagnose-Schnittstelleneinheit (106, 204) eingerichtet und mit dem jeweiligen virtuellen lokalen Netz (105, 203) verbunden.

## Beschreibung

Die vorliegende Erfindung betrifft ein Verfahren zur Übermittlung von Daten zur Netzdiagnose zwischen mittelbar verbundenen Teilnetzen, das insbesondere für industrielle Automatisierungssysteme geeignet ist, und ein Koppel-Kommunikationsgerät zur Durchführung des Verfahrens.

Industrielle Automatisierungssysteme umfassen üblicherweise eine Vielzahl von über ein industrielles Kommunikationsnetz miteinander vernetzten Automatisierungsgeräten und dienen im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet. Insbesondere können Steuerungsdienste bzw. -anwendungen automatisiert und auslastungsabhängig auf aktuell verfügbare Server oder virtuelle Maschinen eines industriellen Automatisierungssystems verteilt werden.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern.

In Ethernet-basierten Kommunikationsnetzen können Probleme entstehen, wenn Netzressourcen für eine Übermittlung von Datenströmen oder von Datenrahmen mit Echtzeitanforderungen konkurrierend für eine Übermittlung von Datenrahmen mit großem Nutzdateninhalt ohne spezielle Dienstgüteanforderungen beansprucht werden. Dies kann schließlich dazu führen, dass Datenströme oder Datenrahmen mit Echtzeitanforderungen nicht entsprechend einer angeforderten bzw. benötigten Dienstgüte übermittelt werden.

EP 3 646 559 B1 betrifft ein Verfahren zur Überprüfung von innerhalb eines industriellen Automatisierungssystems mit mehreren Automatisierungszellen übermittelten Datagrammen, bei dem zu überprüfende Datagramme aus den Automatisierungszellen über eine jeweilige Firewall-Schnittstelle zur Überprüfung an Firewall-System übermittelt und dort regelbasiert überprüft werden. Das Firewall-System wird durch zumindest eine innerhalb eines mehrere Rechnereinheiten umfassenden Datenverarbeitungssystems bereitgestellte virtuelle Maschine gebildet. Zur Übermittlung der zu überprüfenden Datagramme wird jeweils ein Sicherungsschicht-Tunnel zwischen der jeweiligen Firewall-Schnittstelle und dem Firewall-System aufgebaut. Sowohl zu prüfende Datagramme als auch zumindest erfolgreich überprüfte Datagramme werden innerhalb des jeweiligen Sicherungsschicht-Tunnels übermittelt.

In EP 3 035 606 A1 ist ein Verfahren zur Datenübermittlung in einem zumindest 2 virtuelle lokale Netze umfassenden Kommunikationsnetz beschrieben, bei dem Datenströmen jeweils eine Datenstrom-individuelle Ziel-Gerätekennung zugeordnet wird. Bei einer Übermittlung eines Datenstroms von einem Quell-Kommunikationsgerät, das einem ersten virtuellen lokalen Netz zugeordnet ist, an ein Ziel-Kommunikationsgerät, das einem zweiten lokalen Netz zugeordnet ist, wird ein dem Datenstrom innerhalb des ersten virtuellen lokalen Netzes zugeordneter Identifikator in einen dem Datenstrom innerhalb des zweiten virtuellen lokalen Netzes zugeordneten Identifikator umgewandelt.

Aus der älteren internationalen Patentanmeldung mit dem Anmeldeaktenzeichen PCT/EP2021/061123 ist ein Verfahren zur Übermittlung zeitkritischer Daten bekannt, bei dem Datagramme von einem ersten Kommunikationsgerät in einem ersten Teilnetz und zu einem zweiten Kommunikationsgerät in einem zweiten Teilnetz über ein drittes Teilnetz gesendet werden. Dabei sind das erste und das dritte Teilnetz über einen ersten Switch und das zweite und das dritte Teilnetz über einen zweiten Switch verbunden. Die Datagramme werden anhand einer Kennung eines ersten virtuellen lokalen Netzes und einer Prioritätsangabe vom ersten Kommunikationsgerät zum ersten Switch weitergeleitet. Der erste Switch kapselt die durch das erste Kommunikationsgerät gesendeten Datagramme jeweils in Datenrahmen ein, die einem Datenstrom durch das dritte Teilnetz zugeordnet sind, und fügt in die Datenrahmen eine Kennung eines zweiten virtuellen lokalen Netzes ein.

Anhand der Kennung des zweiten virtuellen lokalen Netzes werden entsprechend der älteren internationalen Patentanmeldung mit dem Anmeldeaktenzeichen PCT/EP2021/061123 im dritten Teilnetz Ressourcen entlang eines ausgewählten Pfades reserviert. Der zweite Switch entnimmt die Datagramme, die in die dem Datenstrom zugeordneten Datenrahmen eingekapselt sind, aus empfangenen Datenrahmen und leitet die entnommenen Datagramme anhand der Kennung des ersten virtuellen lokalen Netzes und der Prioritätsangabe zum zweiten Kommunikationsgerät weiter.

Ein steigender Grad an Vernetzung wirkt sich auch auf industrielle Automatisierungssysteme dahingehend aus, dass beispielsweise PROFINET-Teilnetze bzw. -Zellen miteinander über ein Backbone-Netz zu verbinden sind. Hierzu werden die PROFINET-Teilnetze über das Backbone-Netz insbesondere mittels virtueller lokaler Netze (VLAN) auf OSI-Schicht 2 oder mittels Virtual eXtensible LAN (VXLAN) auf OSI-Schicht 3 miteinander verbunden. Eine besondere Herausforderung besteht dabei darin, dass durch bei einer Datenübermittelung über das Backbone-Netz ursprüngliche Protokoll-, Priorisierungs-, Diagnose- oder Topologieinformationen unverfälscht erhalten bleiben. Üblicherweise ist dies in virtualisierten Netzwerk-Umgebungen nicht möglich, da Netzwerk-Komponenten des Backbone-Netz durch eine Vielzahl unterlagerter Netzwerk-Umgebungen transparent genutzt und Backbone-Netze insbesondere gegenüber industriellen Automatisierungssystemen in ihrer Komplexität reduziert dargestellt werden sollen.

Der vorliegenden Erfindung liegt die Aufgabe zugrunde, ein aufwandsarm realisierbares Verfahren zur Übermittlung von Daten zur Netzdiagnose zwischen mittelbar über Sicherungsschicht- oder Vermittlungsschicht-Transitnetze verbundenen Teilnetzen schaffen, das eine unverfälschte Übermittlung von Diagnose- oder Topologieinformationen gewährleistet, und eine geeignete Implementierung zur Durchführung des Verfahrens anzugeben.

Diese Aufgabe wird erfindungsgemäß durch ein Verfahren mit den in Patentanspruch 1 angegebenen Merkmalen und durch ein Koppel-Kommunikationsgerät mit den in Patentanspruch 15 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren zur Übermittlung von Daten zur Netzdiagnose zwischen mittelbar verbundenen Teilnetzen werden Netzdiagnose-Datagramme entsprechend einem vorgegebenen Netzdiagnose-Protokoll zwischen einem ersten Kommunikationsgerät in einem ersten Teilnetz und einem zweiten Kommunikationsgerät in einem zweiten Teilnetz über ein drittes Teilnetz übermittelt. Dabei ist das dritte Teilnetz jeweils über ein Koppel-Kommunikationsgerät, insbesondere einen Switch, mit dem ersten und dem zweiten Teilnetz verbunden. Das vorgegebene Netzdiagnose-Protokoll wird nur im ersten und im zweiten Teilnetz unterstützt. Das erste und das zweite Teilnetz können beispielsweise PROFINET-Zellen zugeordnet sein, während das dritte Teilnetz ein IP- (Internet Protocol) oder TSN-basiertes Transitnetz (Time-sensitive Network) sein kann. In diesem Fall sind die Netzdiagnose-Datagramme PROFINET-Diagnose-Frames. Vorteilhafterweise kann das erste Kommunikationsgerät mittels der Netzdiagnose-Datagramme auch eine Topologieerkennung im zweiten Teilnetz durchführen.

Erfindungsgemäß wird in beiden Koppel-Kommunikationsgeräten für jedes der unmittelbar miteinander verbundenen Teilnetze jeweils ein Koppel-Anschluss verwendet. Die Koppel-Anschlüsse sind in jedem der beiden Koppel-Kommunikationsgeräte jeweils über ein virtuelles lokales Netz verbunden. Dabei wird den virtuellen lokalen Netzen in beiden Koppel-Kommunikationsgeräten dieselbe Kennung zugeordnet. Darüber hinaus wird in beiden Koppel-Kommunikationsgeräten jeweils eine für das vorgegebene Netzdiagnose-Protokoll bestimmte Netzdiagnose-Schnittstelleneinheit, die vorzugsweise durch eine virtualisierte Netzdiagnose-Schnittstelle innerhalb eines Switchs gebildet, eingerichtet und mit dem jeweiligen virtuellen lokalen Netz verbunden. Die dem dritten Teilnetz zugeordneten Koppel-Anschlüsse zwischen den beiden Koppel-Kommunikationsgeräten werden über ein virtuelles lokales Netz oder einen Sicherungsschicht-Tunnel innerhalb des dritten Teilnetzes miteinander verbunden.

Die vorliegende Erfindung kann für unterschiedliche Netzwerk-Virtualisierungstechniken, wie VLAN, VXLAN oder QinQ VLANs, verwendet werden, bei denen Tunnelendpunkte mit einer Netzdiagnose-Schnittstelle verbunden werden können. Unter diesen Voraussetzungen sind weder in Transitnetzen noch in unterlagerten Automatisierungsnetzen Veränderungen notwendig. Entsprechende Funktionen zur transparenten Übermittlung von Diagnose- und Topologieinformationen werden nämlich durch die Koppel-Kommunikationsgeräte bereitgestellt. Daher sind auch keinerlei Änderungen an Schnittstellen von Automatisierungsgeräten erforderlich, an denen bzw. von denen ausgehend Diagnosefunktionen netzübergreifend genutzt werden sollen.

Vorteilhafterweise tauschen die Netzdiagnose-Schnittstelleneinheiten der beiden Koppel-Kommunikationsgeräte untereinander zyklisch aktualisierte Netzdiagnose-Daten über das dritte Teilnetz aus. Entsprechend einer weiteren vorteilhaften Ausgestaltung der vorliegenden Erfindung werden die Netzdiagnose-Datagramme zwischen dem ersten Kommunikationsgerät und der Netzdiagnose-Schnittstelleneinheit des mit dem ersten Teilnetz verbundenen Koppel-Kommunikationsgeräts bzw. zwischen dem zweiten Kommunikationsgerät und der Netzdiagnose-Schnittstelleneinheit des mit dem zweiten Teilnetz verbundenen Koppel-Kommunikationsgeräts mittels Link Layer Discovery Protocol, LLDP, ausgetauscht. Auf diese Weise kann eine aufwandsarme Implementierung der vorliegenden Erfindung realisiert werden.

Die Anwendung der vorliegenden Erfindung ist nicht auf eine Verbindung zwischen einem ersten und einem zweiten Teilnetz über ein drittes Teilnetz beschränkt. Vielmehr können über das dritte Teilnetz Netzdiagnose-Datagramme entsprechend dem vorgegebenen Netzdiagnose-Protokoll zwischen einem weiteren ersten Kommunikationsgerät in einem weiteren ersten Teilnetz und einem weiteren zweiten Kommunikationsgerät in einem weiteren zweiten Teilnetz übermittelt werden. Dabei wird das vorgegebene Netzdiagnose-Protokoll auch im weiteren ersten und im weiteren zweiten Teilnetz unterstützt. Das dritte Teilnetz ist jeweils über zumindest eines der beiden Koppel-Kommunikationsgeräte bzw. über zumindest ein weiteres Koppel-Kommunikationsgerät mit dem weiteren ersten und dem weiteren zweiten Teilnetz verbunden.

Entsprechend einer weiteren vorteilhaften Ausgestaltung der vorliegenden Erfindung wird für das weitere erste und für das weitere zweite Teilnetz in zumindest einem der beiden Koppel-Kommunikationsgeräte bzw. in dem zumindest einen weiteren Koppel-Kommunikationsgerät jeweils ein weiterer Koppel-Anschluss verwendet. Die weiteren Koppel-Anschlüsse sind jeweils über ein weiteres virtuelles lokales Netz verbunden. Außerdem wird den weiteren virtuellen lokalen Netzen in den jeweiligen Koppel-Kommunikationsgeräten dieselbe Kennung zugeordnet, die von der Kennung für eine Verbindung des ersten und des zweiten Teilnetzes verschieden ist.

Darüber hinaus wird für das weitere erste und für das weitere zweite Teilnetz in zumindest einem der beiden Koppel-Kommunikationsgeräte bzw. in dem zumindest einen weiteren Koppel-Kommunikationsgerät vorzugsweise jeweils eine für das vorgegebene Netzdiagnose-Protokoll bestimmte Netzdiagnose-Schnittstelleneinheit eingerichtet und mit dem jeweiligen weiteren virtuellen lokalen Netz verbunden. Analog zu obigen Ausführungen werden die dem dritten Teilnetz zugeordneten weiteren Koppel-Anschlüsse über ein virtuelles lokales Netz oder einen Sicherungsschicht-Tunnel innerhalb des dritten Teilnetzes miteinander verbunden.

Das erfindungsgemäße Koppel-Kommunikationsgerät ist zur Durchführung eines Verfahrens entsprechend vorangehenden Ausführungen vorgesehen und umfasst mehrere Ports zur Verbindung mit Kommunikationsgeräten bzw. Kommunikationsendgeräten. Das Koppel-Kommunikationsgerät ist dafür ausgestaltet und eingerichtet, Netzdiagnose-Datagramme entsprechend einem vorgegebenen Netzdiagnose-Protokoll zwischen einem ersten Kommunikationsgerät in einem ersten Teilnetz und einem zweiten Kommunikationsgerät in einem zweiten Teilnetz über ein drittes Teilnetz zu übermitteln. Dabei ist das dritte Teilnetz über das Koppel-Kommunikationsgerät mit dem ersten oder dem zweiten Teilnetz verbunden. Außerdem ist das vorgegebene Netzdiagnose-Protokoll nur im ersten und im zweiten Teilnetz unterstützt.

Darüber hinaus ist das Koppel-Kommunikationsgerät ferner dafür ausgestaltet und eingerichtet, dass für jedes der unmittelbar miteinander verbundenen Teilnetze jeweils ein Koppel-Anschluss verwendet wird. Dabei sind die Koppel-Anschlüsse über ein virtuelles lokales Netz verbunden. Ferner ist das Koppel-Kommunikationsgerät ferner dafür ausgestaltet und eingerichtet, dass eine für das vorgegebene Netzdiagnose-Protokoll bestimmte Netzdiagnose-Schnittstelleneinheit eingerichtet und mit dem virtuellen lokalen Netz verbunden wird. Des Weiteren ist das Koppel-Kommunikationsgerät ferner dafür ausgestaltet und eingerichtet, den dem dritten Teilnetz zugeordneten Koppel-Anschluss über ein virtuelles lokales Netz oder einen Sicherungsschicht-Tunnel innerhalb des dritten Teilnetzes mit einem Koppel-Anschluss eines weiteren Koppel-Kommunikationsgeräts zu verbinden.

Die vorliegende Erfindung wird nachfolgend an einem Ausführungsbeispiel näher erläutert. Es zeigt
- Figur 1: ein Kommunikationssystem mit zumindest einem ersten und einem zweiten Teilnetz, die über ein drittes Teilnetz und mehrere Koppel-Kommunikationsgeräte miteinander verbunden sind,
- Figur 2: eine Detaildarstellung eines ersten Koppel-Kommunikationsgeräts gemäß Figur 1,
- Figur 3: eine Detaildarstellung eines zweiten Koppel-Kommunikationsgeräts gemäß Figur 1,
- Figur 4: eine Detaildarstellung eines dritten Koppel-Kommunikationsgeräts gemäß Figur 1.

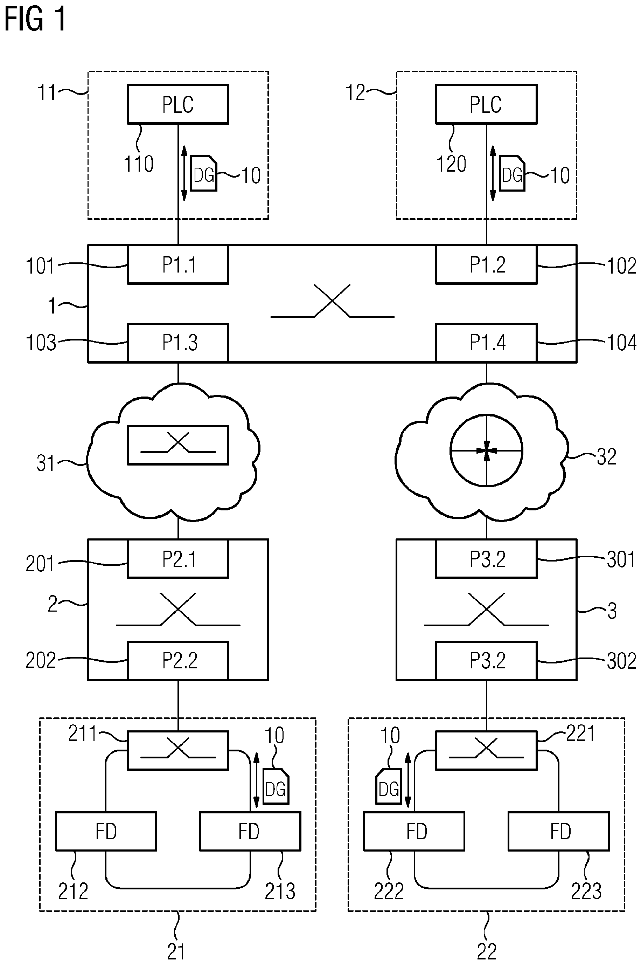

Das in Figur 1 dargestellte Kommunikationssystem für ein industrielles Automatisierungssystem ist in mehrere Teilnetze 11-12, 21-22, 31-32 gegliedert. Innerhalb eines ersten Teilnetzes 11 und eines zweiten Teilnetzes 21 sowie innerhalb eines weiteren ersten Teilnetzes 12 und eines weiteren Teilnetzes 22 werden Datagramme jeweils mittels Switching weitergeleitet. Hierzu umfassen diese Teilnetze 11-12, 21-22 im vorliegenden Ausführungsbeispiel Bridges bzw. Switches 211, 221 als Datagramme weiterleitende Kommunikationsgeräte sowie Automatisierungsgeräte 110, 120, 212-213, 222-223, wie speicherprogrammierbare Steuerungen oder Feldgeräte, mit Bridge- bzw. Switch-Funktion.

Zwischen einem ersten Kommunikationsgerät 110 im ersten Teilnetz 11 und einem zweiten Kommunikationsgerät 212-213 im zweiten Teilnetz 21 werden Netzdiagnose-Datagramme 10 entsprechend einem vorgegebenen Netzdiagnose-Protokoll über ein drittes Teilnetz 31 übermittelt. Dabei ist das dritte Teilnetz 31 über ein erstes Koppel-Kommunikationsgerät 1 mit dem ersten Teilnetz 11 und über ein zweites Koppel-Kommunikationsgerät 2 mit dem zweiten Teilnetz 21 verbunden.

In entsprechender Weise werden auch zwischen einem weiteren ersten Kommunikationsgerät 120 im weiteren ersten Teilnetz 12 und einem weiteren zweiten Kommunikationsgerät 222-223 im weiteren zweiten Teilnetz 22 Netzdiagnose-Datagramme 10 entsprechend dem vorgegebenen Netzdiagnose-Protokoll über ein weiteres drittes Teilnetz 32 übermittelt. Dabei ist das weitere dritte Teilnetz 32 über das erste Koppel-Kommunikationsgerät 1 mit dem weiteren ersten Teilnetz 12 und über ein drittes Koppel-Kommunikationsgerät 3 mit dem weiteren zweiten Teilnetz 22 verbunden.

Die Koppel-Kommunikationsgeräte 1-3 sind vorzugsweise als Switches ausgeführt. Switches umfassen jeweils mehrere Ports und dienen insbesondere zum Anschluss von speicherprogrammierbaren Steuerungen, Bedien- und Beobachtungsstationen, I/O-Controllern oder I/O-Modulen, die ebenfalls Kommunikationsgeräte bzw. Kommunikationsendgeräte darstellen.

Das vorgegebene Netzdiagnose-Protokoll wird nur im ersten 11 und im zweiten Teilnetz 21 sowie im weiteren ersten 12 und im weiteren zweiten Teilnetz 22 unterstützt, nicht aber im dritten Teilnetz 31 und im weiteren dritten Teilnetz 32. Im vorliegenden Ausführungsbeispiel sind das erste 11 und das zweite Teilnetz 21 sowie das weitere erste 12 und das weitere zweite Teilnetz 22 PROFINET-Zellen zugeordnet. Dementsprechend sind die Netzdiagnose-Datagramme 10 PROFINET-Diagnose-Frames. Darüber hinaus sind das erste Kommunikationsgerät 110 und das weitere erste Kommunikationsgerät 120 im vorliegenden Ausführungsbeispiel eine speicherprogrammierbare Steuerung, während das zweite Kommunikationsgerät 212-213 und das weitere zweite Kommunikationsgerät 222-223 ein der jeweiligen speicherprogrammierbaren Steuerung zugeordnetes Feldgerät sind. Mittels der Netzdiagnose-Datagramme 10 kann das erste Kommunikationsgerät 110 insbesondere eine Topologieerkennung im zweiten Teilnetz 21 durchführen. Entsprechendes gilt für das weitere erste Kommunikationsgerät 120 in Bezug auf das weitere zweite Teilnetz 22.

Speicherprogrammierbare Steuerungen umfassen typischerweise jeweils ein Kommunikationsmodul, eine Zentraleinheit sowie zumindest eine Eingabe/Ausgabe-Einheit. Eingabe/Ausgabe-Einheiten können grundsätzlich auch als dezentrale Peripheriemodule ausgestaltet sein, die entfernt von einer speicherprogrammierbaren Steuerung angeordnet sind. Über das Kommunikationsmodul kann eine speicherprogrammierbare Steuerung mit einem Switch oder Router oder zusätzlich mit einem Feldbus verbunden werden. Die Eingabe/Ausgabe-Einheit dient einem Austausch von Steuerungs- und Messgrößen zwischen einer speicherprogrammierbaren Steuerung und einer durch die jeweilige speicherprogrammierbare Steuerung gesteuerten Maschine oder Vorrichtung. Die Zentraleinheit ist insbesondere für eine Ermittlung geeigneter Steuerungsgrößen aus erfassten Messgrößen vorgesehen. Obige Komponenten einer speicherprogrammierbaren Steuerung sind beispielsweise über ein Rückwandbus-System miteinander verbunden.

Zum Austausch von Steuerungs- und Messgrößen mit angeschlossenen Maschinen oder Vorrichtungen können grundsätzlich auch I/O-Module vorgesehen sein. Eine Steuerung von I/O-Modulen kann insbesondere mittels eines I/O-Controllers pro Automatisierungszelle erfolgen. Alternativ hierzu können I/O-Module auch durch eine entfernte speicherprogrammierbare Steuerung angesteuert werden.

Im vorliegenden Ausführungsbeispiel werden Datagramme, insbesondere die Netzdiagnose-Datagramme 10, innerhalb des dritten Teilnetzes 31 mittels Switching weitergeleitet. Dabei werden die dem dritten Teilnetz 31 zugeordneten Koppel-Anschlüsse 103, 201 zwischen dem ersten Koppel-Kommunikationsgerät 1 und dem zweiten Koppel-Kommunikationsgerät 2 über ein virtuelles lokales Netz (VLAN) innerhalb des dritten Teilnetzes 31 miteinander verbunden. Das dritte Teilnetz 31 kann beispielsweise ein TSN-basiertes (Time-sentive Network) Transitnetz sein.

Darüber hinaus werden Datagramme, insbesondere die Netzdiagnose-Datagramme 10, innerhalb des weiteren dritten Teilnetzes 32 im vorliegenden Ausführungsbeispiel mittels Routing weitergeleitet. Dabei werden die Datagramme jeweils in Datenrahmen eingekapselt durch einen Sicherungsschicht-Tunnel innerhalb des weiteren dritten Teilnetzes 32 übermittelt. Insbesondere kann das weitere dritte Teilnetz 32 ein IP-basiertes Transitnetz (Internet Protocol) sein. Vorzugsweise sind die Datenrahmen, in welche die Datagramme jeweils eingekapselt werden, VXLAN Frames oder Frames zur Layer 2 Tunnelung der Datagramme.

Die vorliegenden Erfindung ist nicht darauf beschränkt, ob Datagramme innerhalb des dritten Teilnetzes 31 bzw. des weiteren dritten Teilnetzes 32 mittels Switching oder Routing übermittelt werden. Gegenüber dem vorliegenden Ausführungsbeispiel sind grundsätzlich beliebige Kombinationen möglich. Insbesondere ist es möglich, dass Datagramme innerhalb des dritten Teilnetzes 31 mittels Routing übermittelt werden, während Datagramme innerhalb des weiteren dritten Teilnetzes 32 mittels Switching übermittelt werden. Darüber hinaus ist es möglich, dass Datagramme sowohl innerhalb des dritten Teilnetzes 31 als auch innerhalb des weiteren dritten Teilnetzes 32 mittels Switching oder Routing übermittelt werden. Dementsprechend ist es auch möglich, dass das erste Teilnetz 11, das weitere erste Teilnetz 12, das zweite Teilnetz 21 und das weitere zweite Teilnetz 22 lediglich über ein einziges drittes Teilnetz miteinander verbunden sind.

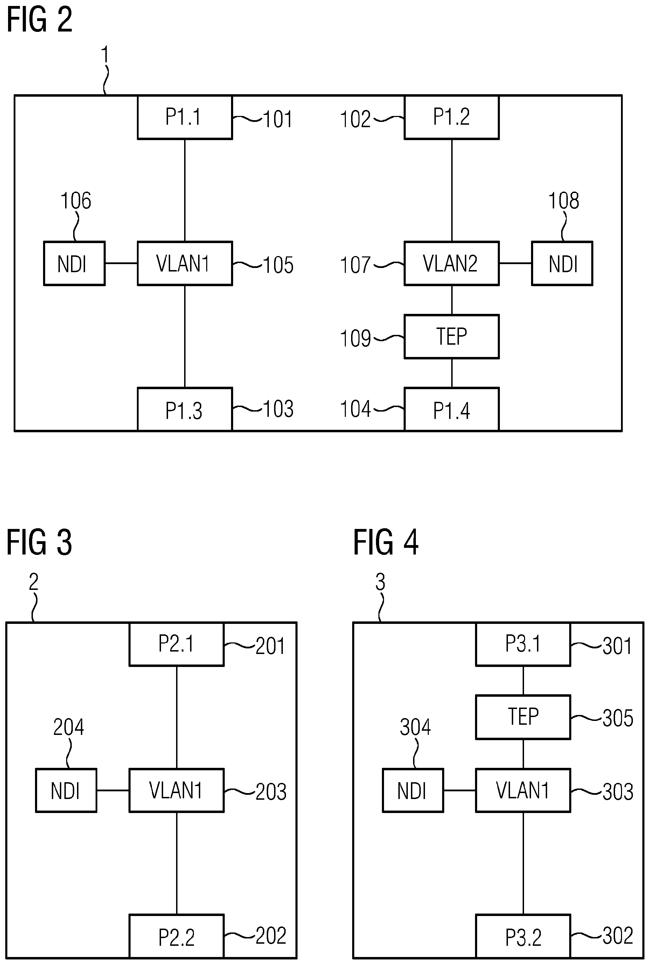

Entsprechend den Detaildarstellungen der Koppel-Kommunikationsgeräte 1-3 in den Figuren 2-4 wird in den Koppel-Kommunikationsgeräten 1-2 für jedes der unmittelbar miteinander verbundenen Teilnetze 11-12, 21-22 bzw. 31-32 jeweils ein Koppel-Anschluss 101-104, 201-202 bzw. 301-302 verwendet. Ein dem ersten Teilnetz 11 zugeordneter Koppel-Anschluss 101 und ein dem dritten Teilnetz 31 zugeordneter Koppel-Anschluss 103 des ersten Koppel-Kommunikationsgeräts 1 einerseits sowie ein dem zweiten Teilnetz 21 zugeordneter Koppel-Anschluss 202 und ein dem dritten Teilnetz 31 zugeordneter Koppel-Anschluss 201 des zweiten Koppel-Kommunikationsgeräts 2 andererseits werden jeweils über ein virtuelles lokales Netz verbunden 105, 203 (siehe Figuren 2 und 3). Dabei wird diesen virtuellen lokalen Netzen 105, 203 in beiden Koppel-Kommunikationsgeräten 1, 2 dieselbe Kennung (VLAN1) zugeordnet.

Außerdem wird in beiden der in den Figuren 2 und 3 dargestellten Koppel-Kommunikationsgeräten 1, 2 jeweils eine für das vorgegebene Netzdiagnose-Protokoll bestimmte Netzdiagnose-Schnittstelleneinheit 106, 204 eingerichtet und mit dem jeweiligen virtuellen lokalen Netz 105, 203 verbunden. Dabei stellt die Netzdiagnose-Schnittstelleneinheit 106 des ersten Koppel-Kommunikationsgeräts 1 stellt vorzugsweise eine PROFINET-Diagnose-Parent-Instanz dar, der gegenüber die Netzdiagnose-Schnittstelleneinheit 203 des zweiten Koppel-Kommunikationsgeräts 2 als PROFINET-Diagnose-Child-Instanz untergeordnet ist. Des Weiteren werden die dem dritten Teilnetz 31 zugeordneten Koppel-Anschlüsse 103, 201 zwischen den beiden Koppel-Kommunikationsgeräten 1, 2 im vorliegenden Ausführungsbeispiel über ein virtuelles lokales Netz (VLAN) innerhalb des dritten Teilnetzes miteinander verbunden.

Die Netzdiagnose-Schnittstelleneinheiten 106, 204 der beiden in den Figuren 2 und 3 dargestellten Koppel-Kommunikationsgeräte 1, 2 tauschen untereinander zyklisch aktualisierte Netzdiagnose-Daten über das dritte Teilnetz 31 aus. Demgegenüber werden die Netzdiagnose-Datagramme 10 zwischen dem ersten Kommunikationsgerät 110 und der Netzdiagnose-Schnittstelleneinheit 106 des ersten Koppel-Kommunikationsgeräts 1 sowie zwischen dem zweiten Kommunikationsgerät 212-213 und der Netzdiagnose-Schnittstelleneinheit 204 des zweiten Koppel-Kommunikationsgeräts 2 mittels Link Layer Discovery Protocol, (LLDP) ausgetauscht. Die Netzdiagnose-Schnittstelleneinheiten 106, 204 werden vorzugsweise jeweils durch eine virtualisierte Netzdiagnose-Schnittstelle innerhalb des jeweiligen Switchs bzw. Koppel-Kommunikationsgeräts 1, 2 gebildet.

Analog zu obigen Ausführungen für eine Übermittlung der Netzdiagnose-Datagramme 10 über das dritte Teilnetz 31 werden ein dem weiteren ersten Teilnetz 12 zugeordneter Koppel-Anschluss 102 und ein dem weiteren dritten Teilnetz 32 zugeordneter Koppel-Anschluss 104 des ersten Koppel-Kommunikationsgeräts 1 einerseits sowie ein dem weiteren zweiten Teilnetz 22 zugeordneter Koppel-Anschluss 302 und ein dem weiteren dritten Teilnetz 32 zugeordneter Koppel-Anschluss 301 des dritten Koppel-Kommunikationsgeräts 3 andererseits jeweils über ein virtuelles lokales Netz verbunden 107, 303 (siehe Figuren 2 und 4). Dabei wird diesen virtuellen lokalen Netzen 107, 303 in beiden Koppel-Kommunikationsgeräten 1, 2 dieselbe Kennung (VLAN2) zugeordnet, die von der Kennung (VLAN1) für eine Verbindung des ersten und des zweiten Teilnetzes verschieden ist.

Darüber hinaus wird in beiden der in den Figuren 2 und 4 dargestellten Koppel-Kommunikationsgeräten 1, 3 jeweils eine für das vorgegebene Netzdiagnose-Protokoll bestimmte Netzdiagnose-Schnittstelleneinheit 108, 304 eingerichtet und mit dem jeweiligen virtuellen lokalen Netz 107, 303 verbunden. Für das erste Koppel-Kommunikationsgerät 1 sind also zwei Netzdiagnose-Schnittstelleneinheiten 106, 108 und virtuelle lokale Netze 105, 107 vorgesehen, jeweils separat für einen Austausch der Netzdiagnose-Datagramme 10 über das dritte Teilnetz 31 und über das weitere dritte Teilnetz 32. Analog zu obigen Ausführungen stellt die Netzdiagnose-Schnittstelleneinheit 108 des ersten Koppel-Kommunikationsgeräts 1 vorzugsweise eine PROFINET-Diagnose-Parent-Instanz dar, der gegenüber die Netzdiagnose-Schnittstelleneinheit 303 des dritten Koppel-Kommunikationsgeräts 3 als PROFINET-Diagnose-Child-Instanz untergeordnet ist.

Die dem weiteren dritten Teilnetz 32 zugeordneten Koppel-Anschlüsse 104, 301 zwischen den beiden Koppel-Kommunikationsgeräten 1, 3 werden im vorliegenden Ausführungsbeispiel über einen Sicherungsschicht-Tunnel, insbesondere einen VXLAN-Tunnel, innerhalb des dritten Teilnetzes miteinander verbunden. Aus diesem Grund sind die dem weiteren dritten Teilnetz 32 zugeordneten Koppel-Anschlüsse 104, 301 jeweils über einen Tunnelendpunkt 109, 305, der zum weiteren dritten Teilnetz 32 eine zugeordnete IP-Schnittstelle (Internet Protocol) aufweist, an das jeweiligen virtuellen lokalen Netz 107, 303 angebunden.

Auch die Netzdiagnose-Schnittstelleneinheiten 108, 304 der beiden in den Figuren 2 und 4 dargestellten Koppel-Kommunikationsgeräte 1, 3 tauschen untereinander zyklisch aktualisierte Netzdiagnose-Daten aus, und zwar über das weitere dritte Teilnetz 32. Ferner werden die Netzdiagnose-Datagramme 10 zwischen dem weiteren ersten Kommunikationsgerät 120 und der für eine Tunnelung über das weitere dritte Teilnetz 32 vorgesehenen Netzdiagnose-Schnittstelleneinheit 108 des ersten Koppel-Kommunikationsgeräts 1 sowie zwischen dem weiteren zweiten Kommunikationsgerät 222-223 und der Netzdiagnose-Schnittstelleneinheit 304 des dritten Koppel-Kommunikationsgeräts 3 mittels Link Layer Discovery Protocol, (LLDP) ausgetauscht. Die Netzdiagnose-Schnittstelleneinheiten 108, 304 werden entsprechend einer bevorzugten Ausführungsform jeweils durch eine virtualisierte Netzdiagnose-Schnittstelle innerhalb des jeweiligen Switchs bzw. Koppel-Kommunikationsgeräts 1, 3 gebildet.

Vorzugsweise verwenden sämtliche miteinander über ein virtuelles lokales Netz mit identischer Kennung gekoppelten Netzdiagnose-Schnittstelleneinheiten 106, 204 bzw. 108, 304 eine einheitliche LLDP-Chassis-ID. In LLDP-Updates, die von einem dem ersten Teilnetz 11, dem zweiten Teilnetz 12, dem weiteren ersten Teilnetz 12 oder dem weiteren zweiten Teilnetz 22 zugeordneten Koppel-Anschluss 101-102, 202, 302 gesendet werden, wird eine solche LLDP-Chassis-ID genutzt. Als LLDP-Port-ID wird eine eindeutige ID genutzt, die aus einem jeweiligen Tunnel-Endpunkt-Namen und einem jeweiligen physikalischen Port gebildet wird. Somit stellen sich untergeordnete PROFINET-Diagnose-Child-Instanzen umfassende Teilnetze gegenüber PROFINET-Diagnose-Child-Instanzen als einziges virtuelles PROFINET-Gerät dar, das mit standardisierten PROFINET-Methoden diagnostiziert werden kann.

## Patentansprüche

1. Verfahren zur Übermittlung von Daten zur Netzdiagnose zwischen mittelbar verbundenen Teilnetzen, bei dem
- Netzdiagnose-Datagramme (10) entsprechend einem vorgegebenen Netzdiagnose-Protokoll zwischen einem ersten Kommunikationsgerät (110) in einem ersten Teilnetz (11) und einem zweiten Kommunikationsgerät (212-213) in einem zweiten Teilnetz (21) über ein drittes Teilnetz (31, 32) übermittelt werden, wobei das dritte Teilnetz jeweils über ein Koppel-Kommunikationsgerät (1, 2) mit dem ersten und dem zweiten Teilnetz verbunden ist und das vorgegebene Netzdiagnose-Protokoll nur im ersten und im zweiten Teilnetz unterstützt wird,
- in beiden Koppel-Kommunikationsgeräten (1,2) für jedes der unmittelbar miteinander verbundenen Teilnetze jeweils ein Koppel-Anschluss (101, 103, 201-202) verwendet wird,
- die Koppel-Anschlüsse (101, 103, 201-202) in jedem der beiden Koppel-Kommunikationsgeräte jeweils über ein virtuelles lokales Netz verbunden (105, 203) sind, wobei den virtuellen lokalen Netzen in beiden Koppel-Kommunikationsgeräten dieselbe Kennung zugeordnet wird,
- in beiden Koppel-Kommunikationsgeräten jeweils eine für das vorgegebene Netzdiagnose-Protokoll bestimmte Netzdiagnose-Schnittstelleneinheit (106, 204) eingerichtet und mit dem jeweiligen virtuellen lokalen Netz (105, 203) verbunden wird,
- die dem dritten Teilnetz zugeordneten Koppel-Anschlüsse zwischen den beiden Koppel-Kommunikationsgeräten über ein virtuelles lokales Netz oder einen Sicherungsschicht-Tunnel innerhalb des dritten Teilnetzes miteinander verbunden werden.

2. Verfahren nach Anspruch 1,
bei dem die Netzdiagnose-Schnittstelleneinheiten (106, 204) der beiden Koppel-Kommunikationsgeräte (1, 2) untereinander zyklisch aktualisierte Netzdiagnose-Daten über das dritte Teilnetz (31, 32) austauschen.

3. Verfahren nach einem der Ansprüche 1 oder 2,
bei dem die Netzdiagnose-Datagramme (10) zwischen dem ersten Kommunikationsgerät (110) und der Netzdiagnose-Schnittstelleneinheit (106) des mit dem ersten Teilnetz (11) verbundenen Koppel-Kommunikationsgeräts (1) und/oder zwischen dem zweiten Kommunikationsgerät (212-213) und der Netzdiagnose-Schnittstelleneinheit (204) des mit dem zweiten Teilnetz (21) verbundenen Koppel-Kommunikationsgeräts (2) mittels Link Layer Discovery Protocol, LLDP, ausgetauscht werden.

4. Verfahren nach einem der Ansprüche 1 bis 3,
bei dem das erste (11) und das zweite Teilnetz (21) PROFINET-Zellen zugeordnet sind, bei dem das dritte Teilnetz (31, 32) ein IP- oder TSN-basiertes Transitnetz ist und bei dem die Netzdiagnose-Datagramme (10) PROFINET-Diagnose-Frames sind.

5. Verfahren nach Anspruch 4,
bei dem das erste Kommunikationsgerät (110) eine speicherprogrammierbare Steuerung ist und bei dem das zweite Kommunikationsgerät (212-213) ein der speicherprogrammierbaren Steuerung zugeordnetes Feldgerät ist.

6. Verfahren nach einem der Ansprüche 4 oder 5,
bei dem das erste Kommunikationsgerät (110) mittels der Netzdiagnose-Datagramme eine Topologieerkennung im zweiten Teilnetz (21) durchführt.

7. Verfahren nach einem der Ansprüche 1 bis 6,
bei dem Datagramme innerhalb des ersten (11) und des zweiten Teilnetzes (21) jeweils mittels Switching weitergeleitet werden.

8. Verfahren nach Anspruch 7,
bei dem Datagramme innerhalb des dritten Teilnetzes (31) mittels Switching weitergeleitet werden und bei die dem dritten Teilnetz zugeordneten Koppel-Anschlüsse (103, 201) zwischen den beiden Koppel-Kommunikationsgeräten (1, 2) über ein virtuelles lokales Netz innerhalb des dritten Teilnetzes (31) miteinander verbunden werden.

9. Verfahren nach Anspruch 7,
bei dem Datagramme innerhalb des dritten Teilnetzes (32) mittels Routing weitergeleitet werden.

10. Verfahren nach Anspruch 9,
bei dem die Datagramme jeweils in Datenrahmen eingekapselt durch einen Sicherungsschicht-Tunnel innerhalb des dritten Teilnetzes übermittelt werden und bei dem die Datenrahmen, in welche die Datagramme jeweils eingekapselt werden, VXLAN Frames oder Frames zur Layer 2 Tunnelung der Datagramme sind.

11. Verfahren nach einem der Ansprüche 1 bis 10,
bei dem die beiden Koppel-Kommunikationsgeräte (1, 2) jeweils als durch einen Switch realisiert sind und bei dem die Netzdiagnose-Schnittstelleneinheiten (106, 204) jeweils durch eine virtualisierte Netzdiagnose-Schnittstelle innerhalb des jeweiligen Switchs gebildet werden.

12. Verfahren nach einem der Ansprüche 1 bis 11,
bei dem über das dritte Teilnetz (32) Netzdiagnose-Datagramme (10) entsprechend dem vorgegebenen Netzdiagnose-Protokoll zwischen einem weiteren ersten Kommunikationsgerät (120) in einem weiteren ersten Teilnetz (12) und einem weiteren zweiten Kommunikationsgerät (222-223) in einem weiteren zweiten Teilnetz (22) übermittelt werden, bei dem das dritte Teilnetz (32) jeweils über zumindest eines der beiden Koppel-Kommunikationsgeräte (1, 2) und/oder über zumindest ein weiteres Koppel-Kommunikationsgerät (3) mit dem weiteren ersten und dem weiteren zweiten Teilnetz verbunden ist und bei dem das vorgegebene Netzdiagnose-Protokoll auch im weiteren ersten und im weiteren zweiten Teilnetz unterstützt wird.

13. Verfahren nach Anspruch 12,
bei dem für das weitere erste (12) und für das weitere zweite Teilnetz (22) in zumindest einem der beiden Koppel-Kommunikationsgeräte (1, 2) und/oder in dem zumindest einen weiteren Koppel-Kommunikationsgerät (3) jeweils ein weiterer Koppel-Anschluss (102, 104, 301-302) verwendet wird, bei dem die weiteren Koppel-Anschlüsse (102, 104, 301-302) jeweils über ein weiteres virtuelles lokales Netz (107, 303) verbunden sind und bei dem den weiteren virtuellen lokalen Netzen in den jeweiligen Koppel-Kommunikationsgeräten dieselbe Kennung zugeordnet wird, die von der Kennung für eine Verbindung des ersten und des zweiten Teilnetzes verschieden ist.

14. Verfahren nach Anspruch 13,
bei dem für das weitere erste (12) und für das weitere zweite Teilnetz (22) in zumindest einem der beiden Koppel-Kommunikationsgeräte (1, 2) und/oder in dem zumindest einen weiteren Koppel-Kommunikationsgerät (3) jeweils eine für das vorgegebene Netzdiagnose-Protokoll bestimmte Netzdiagnose-Schnittstelleneinheit (108, 304) eingerichtet und mit dem jeweiligen weiteren virtuellen lokalen Netz (107, 303) verbunden wird und bei dem die dem dritten Teilnetz (32) zugeordneten weiteren Koppel-Anschlüsse (104, 301) über ein virtuelles lokales Netz oder einen Sicherungsschicht-Tunnel innerhalb des dritten Teilnetzes miteinander verbunden werden.

15. Koppel-Kommunikationsgerät zur Durchführung eines Verfahrens nach einem der Ansprüche 1 bis 14 mit
- mehreren Ports (101-104, 201-202) zur Verbindung mit Kommunikationsgeräten (211, 221) und/oder Kommunikationsendgeräten (110, 120),
- wobei das Koppel-Kommunikationsgerät dafür ausgestaltet und eingerichtet ist, Netzdiagnose-Datagramme (10) entsprechend einem vorgegebenen Netzdiagnose-Protokoll zwischen einem ersten Kommunikationsgerät (110) in einem ersten Teilnetz (11) und einem zweiten Kommunikationsgerät (212-213) in einem zweiten Teilnetz (21) über ein drittes Teilnetz (31) zu übermitteln, wobei das dritte Teilnetz über das Koppel-Kommunikationsgerät mit dem ersten oder dem zweiten Teilnetz verbunden ist und das vorgegebene Netzdiagnose-Protokoll nur im ersten und im zweiten Teilnetz unterstützt ist,
- wobei das Koppel-Kommunikationsgerät ferner dafür ausgestaltet und eingerichtet ist, dass für jedes der unmittelbar miteinander verbundenen Teilnetze jeweils ein Koppel-Anschluss (101, 103, 201-202) verwendet wird, wobei die Koppel-Anschlüsse über ein virtuelles lokales Netz (105, 203) verbunden sind,
- wobei das Koppel-Kommunikationsgerät ferner dafür ausgestaltet und eingerichtet ist, dass eine für das vorgegebene Netzdiagnose-Protokoll bestimmte Netzdiagnose-Schnittstelleneinheit (106, 204) eingerichtet und mit dem virtuellen lokalen Netz (105, 203) verbunden wird,
- wobei das Koppel-Kommunikationsgerät ferner dafür ausgestaltet und eingerichtet ist, den dem dritten Teilnetz zugeordneten Koppel-Anschluss über ein virtuelles lokales Netz oder einen Sicherungsschicht-Tunnel innerhalb des dritten Teilnetzes mit einem Koppel-Anschluss eines weiteren Koppel-Kommunikationsgeräts zu verbinden.
